# EUROPÄISCHE PATENTSCHRIFT

(11) **EP 0 870 946 B1**
(45) Veröffentlichungstag und Bekanntmachung des Hinweises auf die Patenterteilung: **19.09.2001**
(21) Anmeldenummer: 98105490.1
(22) Anmeldetag: 26.03.1998
(51) Int. Cl.: F16F 9/02

(54) **Längenverstellbare Gasfeder**
Gas spring of adjustable length
Ressort à gaz à longueur réglable

(30) Priorität: 09.04.1997 DE 19714646
(43) Veröffentlichungstag der Anmeldung: 14.10.1998
(73) Patentinhaber: SUSPA Holding GmbH, 90518 Altdorf (DE)
(72) Erfinder: Weisser, Frank, 91257 Pegnitz (DE); Wolf, Herbert, 90518 Altdorf (DE)
(74) Vertreter: Rau, Manfred, Dr. Dipl.-Ing.

(56) Entgegenhaltungen:
- EP-A- 0 353 549
- EP-A- 0 383 303
- DE-A- 2 942 455

## Beschreibung

Die Erfindung betrifft eine längenverstellbare Gasfeder nach dem Oberbegriff des Anspruches 1.

Derartige beispielsweise aus der DE-PS 18 12 282 (entsprechend US-PS 3,656,593 und JP-PS 846 405) bekannte Gasfedern weisen ein Ventil mit einem Ventilkörper auf, der auf seiner Außenseite mit zwei Ringnuten zur Aufnahme von zwei Außen-Dichtungen und mit zwei zum Ventilkanal hin offenen Ringnuten mit zwei Innen-Dichtungen versehen ist. Die Montage dieser vier ringförmigen Dichtungen ist außerordentlich aufwendig.

Es ist bereits aus der EP 0 383 303 A2 bekannt geworden, ein Ventil für eine Gasfeder der gattungsgemäßen Art so auszugestalten, daß ein Ventilkörper auf seiner Außenseite und zum Ventilkanal hin insgesamt mit einem zur Abdichtung geeigneten Werkstoff umgespritzt ist, so daß die Funktion der vier erwähnten Dichtungen erreicht wird. Ein Grundproblem liegt daran, daß eine eindeutige Führung des Ventilstiftes und auch eine eindeutige Führung zwischen Ventil und Außenzylinder und Innenzylinder nicht mehr erreichbar ist.

Der Erfindung liegt die Aufgabe zugrunde, eine Gasfeder der gattungsgemäßen Art so auszugestalten, daß die Herstellung des Ventils unter Beibehaltung hoher Funktionssicherheit stark vereinfacht wird.

Diese Aufgabe wird erfindungsgemäß durch die Merkmale im Kennzeichnungsteil des Anspruches 1 gelöst. Durch die erfindungsgemäßen Maßnahmen wird erreicht, daß zum einen alle Dichtungen am Ventilkörper in einem Arbeitsgang angespritzt werden, daß zum anderen aber einerseits zum Ventilkanal und andererseits nach außen hin nur die ringförmigen Dichtungen vorhanden sind, der aus einem starren Werkstoff bestehende Ventilkörper also nach wie vor nach außen seine Anlage- und Zentrierfunktionen erfüllen kann.

Die Unteransprüche geben vorteilhafte Ausgestaltungen wieder.

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: eine längenverstellbare Gasfeder im Längsschnitt,
- Fig. 2: einen Längsschnitt durch das Ventil der Gasfeder,
- Fig. 3: einen gegenüber Fig. 2 um 90° gedrehten Längsschnitt durch das Ventilgehäuse des Ventils nach Fig. 2 und
- Fig. 4: einen Querschnitt durch das Ventilgehäuse entsprechend der Schnittlinie IV-IV in Fig. 3.

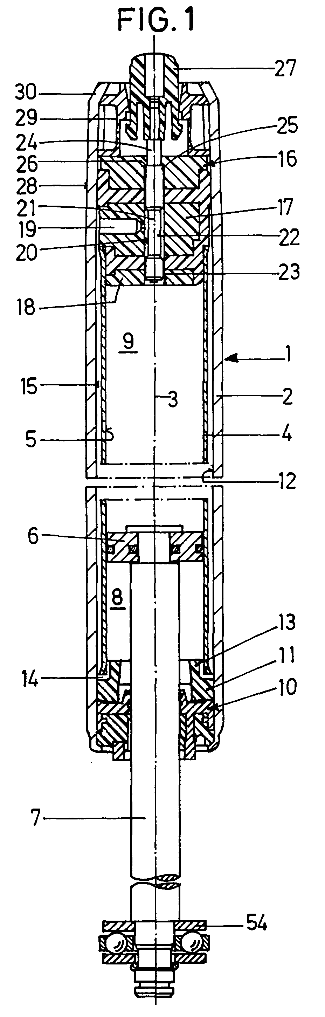

Die in Fig. 1 dargestellte längenverstellbare Gasfeder weist ein im wesentlichen zylindrisches Gehäuse 1 auf, das wiederum einen Außenzylinder 2 und einen konzentrisch zu einer gemeinsamen Mittel-Längs-Achse 3 angeordneten Innenzylinder 4 aufweist. An der Innenwand 5 des Innenzylinders 4 liegt ein Kolben 6 abgedichtet an, der am im Gehäuse 1 befindlichen Ende einer Kolbenstange 7 angebracht ist. Der Kolben 6 teilt den Innenzylinder 4 in zwei Gehäuseräume 8, 9.

Die Kolbenstange 7 tritt an einem Ende des Gehäuses 1 aus diesem aus. Sie ist an diesem Ende in einer Führungs-Dichtungs-Einheit 10 geführt. Zum benachbarten Gehäuseraum 8 hin ist ein an der Einheit 10 anliegender Zentrierring 11 vorgesehen, der einerseits an der Innenwand 12 des Außenzylinders 2 anliegt und dadurch zur Achse 3 zentriert ist und der andererseits einen den Innenzylinder 4 aufnehmenden und zur Achse 3 zentrierenden Zentrierbund 13 aufweist. Außerdem ist der Innenzylinder 4 in Richtung der Achse 3 am Zentrierring 11 abgestützt. Im Zentrierring 11 und im Zentrierbund 13 sind Verbindungskanäle 14 ausgebildet, die den zwischen dem Kolben 6 und der Führungs-Dichtungs-Einheit 10 ausgebildeten Gehäuseraum 8 mit einem zwischen dem Außenzylinder 2 und dem Innenzylinder 4 ausgebildeten, ringspaltartigen Überströmkanal 15 verbinden.

An dem dem Kolbenstangenaustritt, also der Führungs-Dichtungs-Einheit 10, entgegengesetzten Ende ist im Gehäuse 1 ein Ventil 16 angeordnet, dessen Ventilgehäuse 17 abgedichtet an der Innenwand 12 des Außenzylinders 2 und der Innenwand 5 des Innenzylinders 4 anliegt und das mittels eines Zentrierbundes 18 den Innenzylinder 4 zur Achse 3 zentriert und das den Innenzylinder 4 in Richtung der Achse 3 abstützt. Das Ventilgehäuse 17 weist einen an den Überströmkanal 15 angeschlossenen, radial zur Achse 13 verlaufenden Verbindungskanal 19 auf, der an einen im Ventilgehäuse 17 ausgebildeten Ventilkanal 20 angeschlossen ist, der mit dem Gehäuseraum 9 zwischen dem Kolben 6 und dem Ventil 16 verbindbar ist, und der konzentrisch zur Achse 3 verläuft. Zur Herstellung bzw. Sperrung dieser Verbindung ist ein Ventilstift 21 vorgesehen, der eine Einschnürung 22 aufweist, die sich in dem in der Zeichnung dargestellten geschlossenen Zustand des Ventils 16 völlig im Ventilkanal 20 befindet. Beim Einschieben des Ventilstiftes 21 in Richtung zum Gehäuseraum 9 überbrückt die Einschnürung 22 eine Schließstelle 23 des Ventils 16, wodurch eine Verbindung zwischen den beiden Gehäuseräumen 8, 9 und zwar über den Verbindungskanal 14, den Überströmkanal 15, den Verbindungskanal 19 und den Ventilkanal 20 hergestellt wird. Der Ventilstift 21 weist einen nach außen aus dem Ventilgehäuse 17 herausgeführten Betätigungsstift 24 auf, der einen geringeren Durchmesser als der im Ventilgehäuse 17 befindliche Ventilstift 21 aufweist. Der am Übergang vom Ventilstift 21 zum Betätigungsstift 24 ausgebildete Bund 25 liegt gegen einen entsprechenden Anschlag 26 des Gehäuses an. Da der - mit Ausnahme der Einschnürung 22 - bis zum Betätigungsstift 24 durchgehend gleiche Durchmesser d des Ventilstiftes 21 im wesentlichen dem Durchmesser D des Ventilkanals 20 entspricht, wird zur Montage des Ventilstiftes 21 dieser lediglich von der der Schließstelle 23 zugeordneten Seite in den Ventilkanal 20 eingeschoben. Er ist dann gegen ein Herausdrücken nach außen durch den Anschlag 26 geschützt.

Der Betätigungsstift 24 liegt mit seinem außerhalb des Ventilgehäuses 17 befindlichen Ende gegen einen Schieber 27 an, der in einem Befestigungsabschnitt 28 des Gehäuses 1 in Richtung der Achse 3 verschiebbar geführt und gehalten ist. Hierzu ist im Befestigungsabschnitt 28 ein Distanzstück 29 angeordnet, das durch eine Umbördelung 30 des Außenzylinders 2 gehalten ist. Dieses Distanzstück 29 hält auch das Ventil 16 in seiner axialen Lage. An diesem leicht konisch ausgebildeten Befestigungsabschnitt 28 kann der Sitzträger eines Stuhles oder Sessels befestigt werden. Der Schieber 27 wird mittels eines Hebels o. dgl. betätigt. Die Gehäuseräume 8, 9, der Verbindungskanal 14, der Überströmkanal 15, der Verbindungskanal 19 und der Ventilkanal 20 sind mit Druckgas und ggf. etwas Öl gefüllt. Wenn das Ventil 16 geschlossen ist, kann die Kolbenstange 7 mit dem Kolben 6 relativ zum Gehäuse 1 federn. Wenn die Schließstelle 23 des Ventils 16 durch Einschieben des Ventilstiftes 21 in Richtung zum Gehäuseraum 9 geöffnet wird, dann kann entweder Gas aus dem Gehäuseraum 8 auf dem geschilderten Weg in den Gehäuseraum 9 oder umgekehrt strömen, je nach dem welche Kraft auf die Kolbenstange 7 in Richtung der Achse 3 wirkt. Der grundsätzliche Aufbau einer solchen Gasfeder und ihre Wirkungsweise als sogenannte Stuhl-Gasfeder mit Ausnahme des noch zu schildernden Aufbaus des Ventils 16 sind bekannt, und zwar beispielsweise aus der grundlegenden DE-PS 18 12 282 (entsprechend US-PS 3,656,593 und JP-PS 846 405). Ihr Grundprinzip als längenverstellbare Stuhlsäule ist beispielsweise aus der DE-PS 19 31 021 (entsprechend US-PS 3,711 054 und JP-PS 892 209) bekannt.

Das Ventilgehäuse 17 besteht aus einem Ventilkörper 55 aus einem verhältnismäßig harten Kunststoff, beispielsweise aus POM (Polyoxymethylen), und einem Dichtungskörper 56 aus einem entsprechend weicheren, zur Abdichtung geeigneten Werkstoff, beispielsweise aus NBR (Nitril-Butadien-Rubber (Kautschuk)). Die Kunststoffe sind fest formschlüssig miteinander verbunden. Je nach Wahl der Kunststoffe kann der Dichtungskörper 56 beim Anspritzen an den Ventilkörper 55 mit diesem verschweißt werden. Es ist auch ein nachträgliches Verschweißen, beispielsweise durch Ultraschall, möglich.

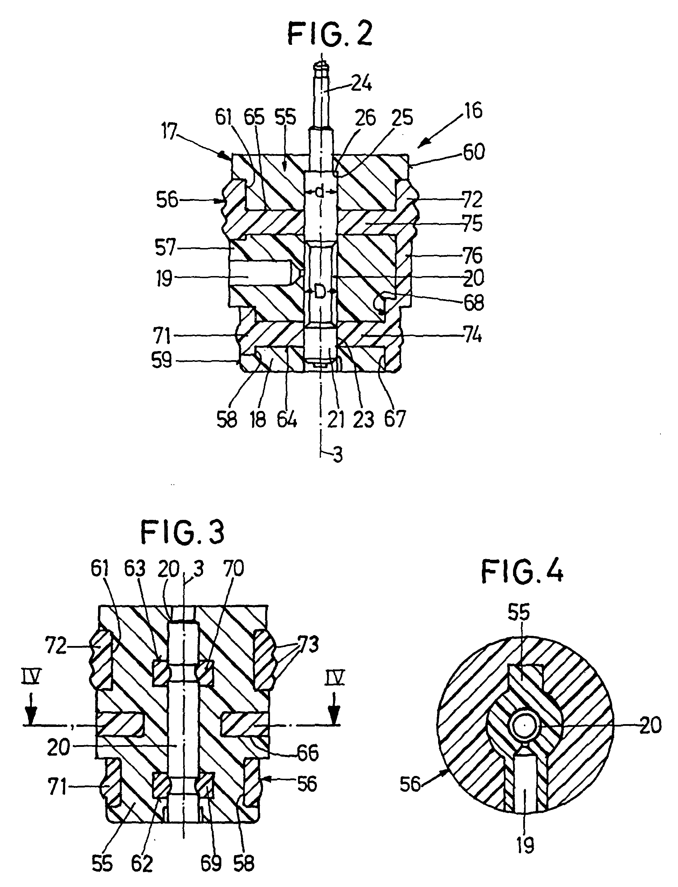

Der Ventilkörper 55 weist einen größeren, im wesentlichen zylindrischen Außenabschnitt 57 auf, der bei der fertig montierten Gasfeder nach Fig. 1 der Innenwand 12 des Außenzylinders 2 mit leichten Spiel zugeordnet ist. Er weist weiterhin den einstückig mit dem Außenabschnitt 57 ausgebildeten Zentrierbund 18 auf. Letzterer weist eine Ringnut 58 in seiner zylindrischen Außenfläche 59 auf. Der Ventilkörper 55 weist weiterhin in der der Innenwand 12 zugewandten Außenfläche 60 eine Ringnut 61 auf. Wie den Figuren 1 und 2 entnehmbar ist, befinden sich die Ringnuten 58 und 61 beiderseits des Verbindungskanals 19. Jeweils in einer - bezogen auf die Achse 3 - gemeinsamen Querschnittsebene mit der Ringnut 58 und der Ringnut 61 andererseits sind in dem Ventilkanal 20 zu diesem hin offene Ringnuten 62, 63 ausgebildet. Die Ringnut 62 ist mit der Ringnut 58 über zwei diametral zueinander verlaufende Spritzkanäle 64 verbunden, während die Ringnut 63 mit der Ringnut 61 über ebenfalls diametral zueinander verlaufende Spritzkanäle 65 verbunden ist.

Wie Fig. 3 und Fig. 4 entnehmbar ist, ist parallel zum Verbindungskanal 19 im Ventilkörper 55 eine Aussparung 66 vorgesehen. Wie Fig. 2 entnehmbar ist, ist auf der dem Verbindungskanal 19 diametral gegenüberliegenden Seite in der Außenfläche 60 des Außenabschnitts 57 eine Längsnut 67 als Anspritzkanal 68 ausgebildet.

An den einstückig in einem Arbeitsschritt durch Spritzgießen hergestellten Ventilkörper 55 wird der Dichtungskörper 56 im selben Arbeitsgang, aber in einem nachfolgenden Arbeitsschritt angespritzt. Hierbei werden über den parallel zur Achse 3 verlaufenden Anspritzkanal 68 insgesamt vier Ringdichtungen hergestellt. Es handelt sich zum einen um zwei Innen-Dichtungen 69, 70, die in den Ringnuten 62, 63 ausgebildet werden, und die bei nicht montiertem Ventilstift 21 leicht nach innen in den Ventilkanal 20 vorstehen. Gegen die Innen-Dichtungen 69, 70 liegt der Ventilstift 21 bei geschlossenen Ventil 16 entsprechend der Darstellungen in den Figuren 1, 2 und 3 derart an, daß die Einschnürung 22 sich zwischen den Innen-Dichtungen 69, 70 befindet. Weiterhin werden zwei Außen-Dichtungen 71, 72 gebildet, die in den Ringnuten 58, 61 ausgebildet sind. Die in der Ringnut 61 befindliche Außen-Dichtung 72 ist als Mehrfachlippendichtung ausgebildet, deren Dichtungslippen 73 dichtend zur Anlage an der Innenwand 12 des Außenzylinders 2 kommen, und zwar ggf. auch in dem leicht konisch verlaufenden Befestigungsabschnitt 28. Die andere Außen-Dichtung 71 wird in der Ringnut 58 ausgebildet und kommt zur Anlage an der Innenwand 5 des Innenzylinders 4. Die Innen-Dichtung 69 ist mit der Außen-Dichtung 71 durch in den Spritzkanälen 64 befindliche Stege 74 verbunden, während die Innen-Dichtung 70 mit der Außen-Dichtung 72 über in den Spritzkanälen 65 befindliche Stege 75 verbunden ist. Im Anspritzkanal 68 ist ein die Außen-Dichtungen 71, 72 verbindender Längssteg 76 ausgebildet.

## Patentansprüche

1. Längenverstellbare Gasfeder
- mit einem aus einem Außenzylinder (2) und einem Innenzylinder (4) gebildeten Gehäuse (1), das ein erstes Ende und ein zweites Ende und eine Mittel-Längs-Achse (3) aufweist,
- mit einem zwischen Innenzylinder (4) und Außenzylinder (2) ausgebildeten Überströmkanal (15),
- mit einem im Innenzylinder (4) verschiebbar angeordneten, den Innenzylinder (4) in einen ersten Gehäuseraum (8) und einen zweiten Gehäuseraum (9) unterteilenden Kolben (6),
- mit einer am Kolben (6) angebrachten, durch den ersten Gehäuseraum (8) und aus dem Gehäuse (1) geführten konzentrisch zur Achse (3) angeordneten Kolbenstange (7),
- mit einer am ersten Ende des Gehäuses (1) angeordneten, den ersten Gehäuseraum (8) nach außen abschließenden Führungs-Dichtungs-Einheit (10) für die Kolbenstange (7),
- mit mindestens einem den ersten Gehäuseraum (8) mit dem Überströmkanal (15) ständig verbindenden Verbindungskanal (14),
- mit einem am zweiten Ende des Gehäuses (1) angeordneten, den zweiten Gehäuseraum (9) abschließenden Ventil (16) zum wahlweisen Verbinden des zweiten Gehäuseraumes (9) mit dem Überströmkanal (15), wobei
das Ventil (16) einen Ventilkörper (55) aufweist,
-- der mit einer zur Achse (3) konzentrischen Außenfläche (60) im Außenzylinder (2) angeordnet ist und der einen zur Achse (3) konzentrischen Zentrierbund (18) zur Aufnahme des Innenzylinders (4) aufweist,
-- der in der Außenfläche (60) eine Ringnut (61) mit einer an der Innenwand (12) des Außenzylinders (2) anliegenden ersten Außen-Dichtung (72) aufweist,
-- der im Zentrierbund (18) eine zweite Ringnut (58) mit einer an der Innenwand (5) des Innenzylinders (4) anliegenden zweiten Außen-Dichtung (71) aufweist,
-- der einen zur Achse (3) konzentrischen Ventilkanal (20) aufweist,
-- der eine zum Ventilkanal (20) hin offene, vom zweiten Gehäuseraum (9) distanzierte Ringnut (63) mit einer ersten Innen-Dichtung (70) aufweist,
-- der eine zum Ventilkanal (20) hin offene, dem zweiten Gehäuseraum (9) benachbarte Ringnut (62) mit einer zweiten Innen-Dichtung (69) aufweist,
-- der einen einerseits mit dem Überströmkanal (15) und andererseits mit dem Ventilkanal (20) ständig verbundenen, zwischen der ersten Innen-Dichtung (70) und der zweiten Innen-Dichtung (69) in den Ventilkanal (20) mündenden Verbindungskanal (19) aufweist, und
-- der einen im Ventilkanal (20) in Richtung der Achse (3) zum zweiten Gehäuseraum (9) hin verschiebbaren Ventilstift (21) aufweist, der bei geschlossenem Ventil dichtend an der ersten Innen-Dichtung (70) und an der zweiten Innen-Dichtung (69) anliegt und der bei geöffnetem Ventil die zweite Innen-Dichtung (69) überbrückt und den Ventilkanal (20) mit den zweiten Gehäuseraum (9) verbindet,
**dadurch gekennzeichnet,**
**daß** die die erste Außen-Dichtung (72) aufnehmende Ringnut (61) mit der die erste Innen-Dichtung (70) aufnehmenden Ringnut (63) durch mindestens einen ersten Spritzkanal (65) verbunden ist,
daß die die zweite Außen-Dichtung (71) aufnehmende Ringnut (58) mit der die zweite Innen-Dichtung (69) aufnehmenden Ringnut (62) durch mindestens einen zweiten Spritzkanal (64) verbunden ist,
daß die erste Außen-Dichtung (72) und die erste Innen-Dichtung (70) durch einen ersten Steg (75) in dem mindestens einen ersten Spritzkanal (65) verbunden ist und
daß die zweite Außen-Dichtung (71) mit der zweiten Innen-Dichtung (69) durch einen zweiten Steg (74) in dem mindestens einen zweiten Spritzkanal (64) verbunden ist.

2. Gasfeder nach Anspruch 1, **dadurch gekennzeichnet,**
**daß** der mindestens eine erste Spritzkanal (65) und der mindestens eine zweite Spritzkanal (64) durch einen Anspritzkanal (68) miteinander verbunden sind.

3. Gasfeder nach Anspruch 1 oder 2, **dadurch gekennzeichnet,**
**daß** der mindestens eine erste Spritzkanal (65) im wesentlichen radial zur Achse (3) verläuft.

4. Gasfeder nach einem der Ansprüche 1 bis 3, **dadurch gekennzeichnet,**
**daß** der mindestens eine zweite Spritzkanal (64) im wesentlichen radial zur Achse (3) verläuft.

5. Gasfeder nach einem der Ansprüche 2 bis 4, **dadurch gekennzeichnet,**
**daß** der Anspritzkanal (68) durch eine nach außen offene Längsnut (67) im Ventilkörper (55) gebildet ist.

6. Gasfeder nach einem der Ansprüche 1 bis 5, **dadurch gekennzeichnet,**
**daß** zwei diametral zueinander verlaufende erste Spritzkanäle (65) vorgesehen sind.

7. Gasfeder nach einem der Ansprüche 1 bis 6, **dadurch gekennzeichnet,**
**daß** zwei diametral zueinander laufende zweite Spritzkanäle (64) vorgesehen sind.

8. Gasfeder nach einem der Ansprüche 1 bis 7, **dadurch gekennzeichnet,**
**daß** die erste Außen-Dichtung (72), die erste Innen-Dichtung (70), die zweite Außen-Dichtung (71), die zweite Innen-Dichtung (69) und der mindestens eine erste Steg (75) und der mindestens eine zweite Steg (74) einen einstückigen Dichtungskörper (56) aus Dichtungsmaterial bilden.

9. Gasfeder nach einem der Ansprüche 1 bis 8, **dadurch gekennzeichnet,**
**daß** der Ventilkörper (55) aus einem hart elastischen Kunststoff besteht.

10. Gasfeder nach einem der Ansprüche 1 bis 9, **dadurch gekennzeichnet,**
**daß** die Innen-Dichtungen (69, 70) und die Außen-Dichtungen (71, 72) aus einem elastischen Dichtungs-Werkstoff bestehen.

## Claims

1. An adjustable length gas spring, comprising
- a housing (1) formed by an exterior cylinder (2) and an interior cylinder (4) and with a first end and a second end and a central longitudinal axis (3),
- an overflow channel (15) formed between the interior cylinder (4) and the exterior cylinder (2),
- a piston (6) disposed displaceably in the interior cylinder (4) and dividing the interior cylinder (4) into a first housing chamber (8) and a second housing chamber (9),
- a piston rod (7) mounted on the piston (6) and disposed concentrically of the axis (3) and extending through the first housing chamber (8) and out of the housing (1),
- a piston rod (7) guide and seal unit (10) disposed at the first end of the housing (1) and externally closing the housing chamber (8),
- at least one passageway (14) permanently connecting the first housing chamber (8) with the overflow channel (15),
- a valve (16) disposed at the second end of the housing (1) and closing the second housing chamber (9) and provided for optional connection of the second housing chamber (9) with the overflow channel (15),
the valve (16) having a valve body (55),
-- which is disposed in the exterior cylinder (2) by an outer surface (60) concentric of the axis (3), and which comprises a centering collar (18) concentric of the axis (3) for centering and holding the interior cylinder (4),
-- which, in the outer surface (60), comprises an annular groove (61) with a first outside seal (72) that rests on the inside wall (12) of the exterior cylinder (2),
-- which, in the centering collar (18), comprises a second annular groove (58) with a second outside seal (71) that rests on the inside wall (5) of the interior cylinder (4),
-- which comprises a valve channel (20) concentric of the axis (3),
-- which comprises an annular groove (63) with a first inside seal (70), the annular groove (63) being open towards the valve channel (20) and spaced from the second housing chamber (9),
-- which comprises an annular groove (62) with a second inside seal (69), the annular groove (62) being open towards the valve channel (20) and adjacent to the second housing chamber (9),
-- which comprises a passageway (19) permanently connected with the overflow channel (15) on the one hand and with the valve channel (20) on the other and opening into the valve channel (20) between the first inside seal (70) and the second inside seal (69), and
-- which comprises a valve pin (21) which is displaceable in the valve channel (20) in the direction of the axis (3) towards the second housing chamber (9), and which rests sealingly on the first inside seal (70) and on the second inside seal (69) when the valve is closed, and which bridges the second inside seal (69) and connects the valve channel (20) with the second housing chamber (9) when the valve is opened,
**characterized in that**
the annular groove (61) lodging the first outside seal (72) is connected with the annular groove (63) lodging the first inside seal (70) by at least one first injection channel (65),
in that the annular groove (58) lodging the second outside seal (71) is connected with the annular groove (62) lodging the second inside seal (69) by at least one second injection channel (64),
in that the first outside seal (72) and the first inside seal (70) are connected by a first web (75) in the at least one first injection channel (65), and
in that the second outside seal (71) is connected with the second inside seal (69) by a second web (74) in the at least one second injection channel (64).

2. A gas spring according to claim 1, **characterized in that**
the at least one first injection channel (65) and the at least one second injection channel (64) are connected with each other by a runner (68).

3. A gas spring according to claim 1 or 2, **characterized in that** the at least one first injection channel (65) is substantially radial to the axis (3),

4. A gas spring according to one of claims 1 to 3, **characterized in that** the at least one second injection channel (64) is substantially radial to the axis (3).

5. A gas spring according to one of claims 2 to 4, **characterized in that** the runner (68) is formed in the valve body (55) by a lengthwise groove (67) which is open externally.

6. A gas spring according to one of claims 1 to 5, **characterized in that** two first injection channels (65) are provided, extending diametrically to each other.

7. A gas spring according to one of claims 1 to 6, **characterized in that** two second injection channels (64) are provided, extending diametrically to each other.

8. A gas spring according to one of claims 1 to 7, **characterized in that** the first outside seal (72), the first inside seal (70), the second outside seal (71), the second inside seal (69) and the at least one first web (75) and the at least one second web (74) constitute a one-piece sealing member (56) consisting of a sealant.

9. A gas spring according to one of claims 1 to 8, **characterized in that** the valve body (55) consists of a hard elastic plastic material.

10. A gas spring according to one of claims 1 to 9, **characterized in that** the inside seals (69, 70) and the outside seals (71, 72) consist of an elastic sealant.

## Revendications

1. Ressort pneumatique de longueur réglable, comportant
- un boîtier (1) formé par un cylindre extérieur (2) et un cylindre intérieur (4) et qui possède une première extrémité et une deuxième extrémité et un axe médian longitudinal (3),
- un canal de transfert (15) formé entre le cylindre intérieur (4) et le cylindre extérieur (2),
- un piston (6) qui est disposé de manière à être déplaçable dans le cylindre intérieur (4) et divise le cylindre intérieur (4) en une première chambre (8) du boîtier et une seconde chambre (9) du boîtier,
- une tige de piston (7) montée sur le piston (6) en étant guidée à travers la première chambre (8) du boîtier et hors du boîtier (1),
- une unité de guidage et d'étanchéité (10), qui est disposée sur la première extrémité du boîtier (1) et qui ferme en direction de l'extérieur la première chambre (8) du boîtier, pour la tige de piston (7),
- au moins un canal de liaison (14) qui relie en permanence la première chambre (8) du boîtier au canal de transfert (15) ,
- une soupape (16) qui est montée sur la seconde extrémité du boîtier (1) et ferme la seconde chambre (9) du boîtier et sert à relier au choix la seconde chambre (9) du boîtier au canal de transfert (4), la soupape (16) possédant un corps de soupape (55),
-- qui est disposé de manière à présenter une surface extérieure (60) concentrique à l'axe (3), dans le cylindre extérieur (2) et possède un collet de centrage (18), qui est concentrique à l'axe (3) et sert à loger le cylindre intérieur (4),
-- qui comporte, dans la surface extérieure (60), une gorge annulaire (61) pourvue d'une première garniture d'étanchéité extérieure (72) appliquée contre la paroi intérieure (12) du cylindre extérieur (2),
-- qui possède, dans le collet de centrage (18), une seconde gorge annulaire (58) pourvue d'une garniture d'étanchéité extérieure s'appliquant contre la paroi intérieure (5) du cylindre intérieur (4),
-- qui comporte un canal de soupape (20) concentrique à l'axe (3),
-- qui comporte une gorge annulaire (63) qui s'ouvre en direction du canal de soupape (20), est distante de la seconde chambre (9) du boîtier et possède une première garniture d'étanchéité intérieure (70),
-- qui possède une gorge annulaire (62), qui est tournée vers le canal de soupape (20), est voisine de la seconde chambre (9) du boîtier et possède une seconde garniture d'étanchéité intérieure (69),
-- qui comporte un canal de liaison (19), qui est relié en permanence d'une part au canal de transfert (15) et d'autre part au canal de soupape (20) et débouche dans le canal de soupape (20) entre la première garniture d'étanchéité intérieure (70) et la seconde garniture d'étanchéité intérieure (69), et
-- qui possède une tige de soupape (21), qui est déplaçable dans le canal de soupape (20) dans la direction de l'axe (3) en direction de la seconde chambre (9) du boîtier et qui, lorsque la soupape est fermée, s'applique d'une manière étanche contre la première garniture d'étanchéité (70) et contre la seconde garniture d'étanchéité de la chambre (9), et qui, lorsque la soupape est ouverte, dépasse la seconde garniture d'étanchéité intérieure (69) et relie le canal de soupape (20) à la seconde chambre (9) du boîtier,
**caractérisé en ce**
que la gorge annulaire (61), qui loge la première garniture d'étanchéité extérieure (72), est reliée à la gorge annulaire (63) qui loge la première garniture d'étanchéité intérieure (70), par au moins un premier canal d'injection (65),
que la gorge annulaire (58), qui loge la seconde garniture d'étanchéité extérieure (71), est reliée à la gorge annulaire (62), qui loge la seconde garniture d'étanchéité intérieure (69), par au moins un second canal d'injection (64) ,
que la première garniture d'étanchéité extérieure (72) et la première garniture d'étanchéité intérieure (70) sont reliées par une première barrette (75) dans le au moins un premier canal d'injection (65), et
que la seconde garniture d'étanchéité extérieure (71) est reliée à la seconde garniture d'étanchéité intérieure (69) par une seconde barrette (64) dans le au moins un second canal d'injection (75) .

2. Ressort pneumatique selon la revendication 1, **caractérisé en ce que** le au moins un premier canal d'injection (65) et le au moins un second canal d'injection (64) sont reliés entre eux par l'intermédiaire d'un canal de début d'injection (68).

3. Ressort pneumatique selon la revendication 1 ou 2, **caractérisé en ce que** le au moins un premier canal d'injection (65) s'étend sensiblement radialement par rapport à l'axe (3).

4. Ressort pneumatique selon l'une des revendications 1 à 3, **caractérisé en ce qu'**au moins un second canal d'injection (64) s'étend sensiblement radialement par rapport à l'axe (3).

5. Ressort pneumatique selon l'une des revendications 3 à 4, **caractérisé en ce que** le canal de début d'injection (68) est formé par une rainure longitudinale (67), ouverte vers l'extérieur et formée dans le corps de soupape (55).

6. Ressort pneumatique selon l'une des revendications 1 à 5, **caractérisé en qu'**il est prévu deux premiers canaux d'injection (65) qui sont alignés diamétralement l'un sur l'autre.

7. Ressort pneumatique selon l'une des revendications 1 à 6, **caractérisé en ce qu'**il est prévu deux seconds canaux d'injection (64) qui sont alignés diamétralement l'un sur l'autre.

8. Ressort pneumatique selon l'une des revendications 1 à 7, **caractérisé en ce que** la première garniture d'étanchéité extérieure (72), la première garniture d'étanchéité intérieure (70), la seconde garniture d'étanchéité extérieure (71), la seconde garniture d'étanchéité intérieure (69) et la au moins une première barrette (75) et la au moins une seconde barrette (74) forment un corps d'étanchéité monobloc (56) formé d'un matériau d'étanchéité.

9. Ressort pneumatique selon l'une des revendications 1 à 8, **caractérisé en ce que** le corps de soupape (55) est formé d'une manière plastique élastique dure.

10. Ressort pneumatique selon l'une des revendications 1 à 9, **caractérisé en ce que** les garnitures d'étanchéité intérieures (69, 70) et les garnitures d'étanchéité extérieures (71, 72) sont formées d'un matériau d'étanchéité élastique.
